Europäisches Patentamt

European Patent Office

Office européen des brevets

(11) Publication number: **0 605 088 A2**

# EUROPEAN PATENT APPLICATION

(21) Application number: **93307690.3**

(22) Date of filing: **28.09.93**

(51) Int. Cl.⁵: **H04L 12/18**

(30) Priority: **14.10.92 CA 2080530**

(43) Date of publication of application:
**06.07.94 Bulletin 94/27**

(84) Designated Contracting States:
**DE FR GB**

(71) Applicant: **INTERNATIONAL BUSINESS MACHINES CORPORATION**
**Old Orchard Road**
**Armonk, N.Y. 10504(US)**

(72) Inventor: **Chiu, Ho K.**

26 Withycombe Crescent
Scarborough, Ontario(CA)
Inventor: **Helms, Richard Morgan**
**Ye Olde Helmstead Farm**
**RR No.1**
**Sunderland, Ontario(CA)**

(74) Representative: **Burt, Roger James, Dr.**
**IBM United Kingdom Limited**
**Intellectual Property Department**
**Hursley Park**
**Winchester Hampshire SO21 2JN (GB)**

(54) **Computer conferencing.**

(57) A computer conferencing system permits individual workstations, capable of communication with other stations by means of telecommunication or network links of diverse types, to participate in a conference through a dynamic network which they may enter or leave at will. Each participating station must be able to establish at least one and preferably at least two independent physical communication links with other stations, and maintains a network routing table storing data as to other stations to which it is logically connected directly or indirectly through stations to which it is physically connected. On establishing a physical connection to another station it transmits data to that station based on the content of its routing table and receives data based on the content of the other station's routing table. It also transmits, to other stations to which it is logically connected, data relative to changes in its logical status, and receives data as to changes in the logical status of other stations within the network, and updates its routing table accordingly.

FIG. 3B

This invention relates to computer conferencing, and more particularly to techniques by means of which the operators of individual computer stations may participate in a computer conference through a dynamic network which they may enter or leave at will.

Whilst available computer networking and telecommunications facilities provide facilities for point- to-point conferencing links between stations, and stations within a network may have multipoint broadcast or conferencing facilities, these are not generally adapted for the establishment of conferencing networks involving participants in different and possibly physically incompatible physical networks, and for participants who are outside a network and accessible only through telecommunication links. Existing network conferencing facilities tend to be governed by the topology of the network, and lack the flexibility required for a truly dynamic conferencing network.

These problems are discussed, in a paper entitled "Distributed Knowledge Worker (DKW): Personal Conferencing System" September 20, 1991, by Rich Helms, one of the inventors of the present system. Whilst desiderata for computer conferencing systems are discussed, implementation is left as a problem to be resolved. The prior art known to us does not provide an adequate solution to practical conferencing situations which may require communication between unconnected and possibly dissimilar networks and stand alone stations.

IBM Technical Disclosure Bulletin, Volume 28, Number 3, August 1985, discloses a dynamic conference calling configuration, which however depends upon a topology in which nodes are arranged in a ring around which data packets circulate, with nodes being inserted into and deleted from the ring.

Dynamically reconfigurable networks are known for example from U.S. Patents Nos. 4,745,597 (Morgan et al), 4,754,395 (Weisshaar et al) and 5,048,014 (Fischer). Such arrangements cannot provide for communications outside of the physical architecture of the network.

U.S. Patent No. 4,872,197 (Pemmaraju) discloses a dynamically configurable communications network, reliant however on the provision of nodes to be networked with a specialized communications coprocessor which establishes communication with other like processors according to a specific protocol.

The prior art therefore does not provide a dynamic computer conferencing system offering full flexibility as to the location and type of participants, allowing them to enter and leave the conference at will.

Accordingly, the invention provides a computer workstation capable of participating in a computer conferencing network, including:

means for establishing and discontinuing at least one bidirectional physical messaging connection with another workstation according to a protocol permitting the establishment of such a connection responsive to a protocol level request, whereby such a connection serves to link the two workstations in a computer conferencing network;

means for maintaining a network routing table for storing data listing the workstations in the network to which said workstation is directly physically connected, and workstations in the network to which said workstation is logically connected directly or indirectly through those workstations to which it is physically connected;

means responsive to the establishment of a connection with another workstation to transmit data stored in said routing table to said another workstation, and to receive from said another workstation data stored in its routing table;

means for transmitting to the other workstations within the network, through the other workstations to which the workstation is physically connected, data relating to changes in the logical status of said workstation within the network, and for receiving through the other workstations to which the station is physically connected data as to changes in the logical status of said other workstations within the network; and

means for updating the routing table in accordance with data received from said other workstations within the network.

Preferably the means for establishing and discontinuing a bidirectional physical messaging connection is provided by a computer network into which the workstation is physically connected, or by an asynchronous interface to a switched telephone system. In fact it is advantageous for the workstation to include at least two independent means for establishing and discontinuing a bidirectional physical messaging connection, whether these be to the same type of network, or to a variety of network types. The possession of two such means for establishing a connection allows the workstation to act as a link between two other workstations in the network.

In a preferred embodiment, the workstation is allocated an network ID, and the means for establishing and discontinuing a bidirectional physical messaging connection is configured to transmit data in packets labelled with the network IDs of other stations to which it is logically connected via that physical connection and which are intended to receive the data, and to receive data labelled with its own ID or with the ID of stations to which it is logically connected via another physical connection.

Thus network stations may be equipped with suitable communications facilities, whether by means of a computer network to which the station is connected or other telecommunication facilities, with the capability of entering and leaving a dynamic network of stations forming a conference in a manner which is substantially hardware independent provided that the station has the capability to establish a bidirectional messaging link with at least one other station of similar capabilities within the network.

Such a computer workstation has the capability of participating at physical and logical levels in a computer conferencing network, and includes: at least one means for establishing and discontinuing a bidirectional physical messaging connection with another station having similar capability, and with which it is desired to network, according to a protocol permitting the establishment of such a connection responsive to a protocol level request; means establishing a network routing table at the station storing data as to other stations to which it is directly physically connected, and as to other stations to which it is logically connected directly or indirectly through said stations to which it is physically connected; means responsive to the establishment of a connection with another station to transmit said data from said routing table to said other station, and to receive from said other station data in the routing table of that station; means to transmit to other stations within the network, through other stations to which the station is physically connected, data relative to changes in the logical status of the station within the network, and to receive through other stations to which the station is physically connected data as to changes in the logical status of other stations within the network; and means to update the routing table in accordance with data received from other stations within the network.

At least a proportion of the stations within a dynamic conferencing network of the above stations must have a capability of simultaneously establishing at least two independent physical messaging connections so that they can act as bridges within the network. Without such bridges, only two station point-to-point communication is possible. Any station capable of only a single messaging connection must be connected to a bridge. Any bridge station must have at least some degree of multi-tasking or task-switching capability so as to be able to handle its multiple physical messaging connections.

An embodiment of the invention will now be discussed in more detail by way of example, with reference to the accompanying drawings, in which:

Figure 1 is a simplified block schematic diagram of microcomputer forming a station in a conferencing system;

Figure 2 is a simplified diagram showing the principal levels of service provided by a station during conferencing; and

Figures 3A - 3G are diagrams illustrating the initiation and modification of a conference.

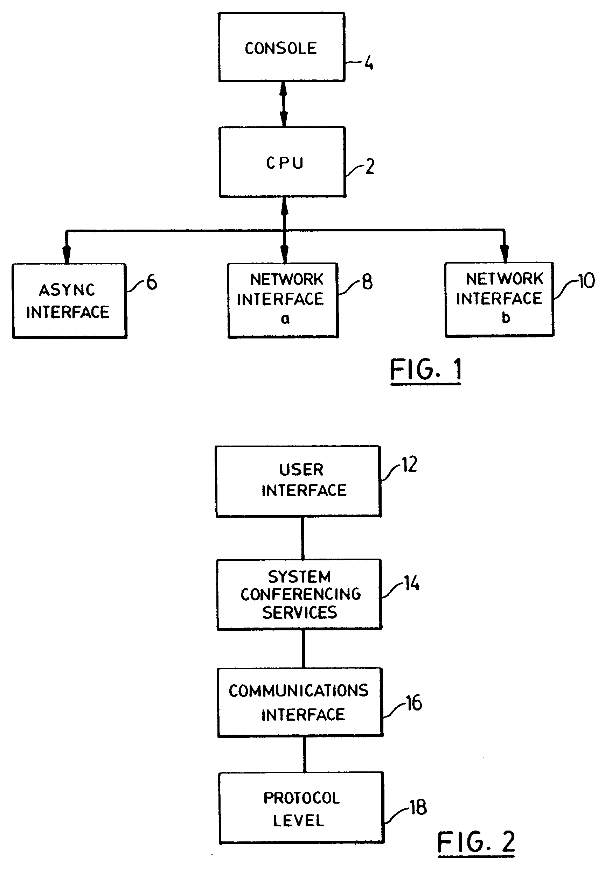

In order to provide a conferencing system which is to a substantial degree hardware independent, it is typically implemented by a utility program product, which may form an integral portion or extension of the operating system of a station which is to be provided with conferencing capabilities. Such a station, shown in block form in Figure 1, requires certain minimum capabilities. Thus it must have, besides a central processing unit (CPU) 2, a console 4 providing a physical user interface and at least one external peripheral interface through which it can establish a communication link with another station of similar capabilities. In general, it should have the capability of establishing at least two independent communication links with other stations so that it can form a link rather than merely a dead end in a network to be formed. In Figure 1, an exemplary station is shown as having an asynchronous interface 6, and interfaces 8 and 10 to two different networks a and b.

Referring to Figure 2, the principal levels of service provided by a station during conferencing are illustrated. Thus at the highest level is the user interface service 12 by means of which a user communicates with the system and the services which it provides. These services will be characteristic of the system, do not form part of the invention, and need not be described further, except to indicate that they must be sufficient to provide access to lower level services. The system of Figure 2 includes system conferencing services 14, which in turn need to utilize communications interface services 16 provided by the system, which will depend upon the interfaces available; in the example shown in Figure 1, these may include services relevant to the interfaces 6, 8 and 10. These latter services are characteristic of the interfaces provided, and again form no part of the invention beyond that they are adequate to the data transfer requirements of the conference services. Likewise, the actual physical transfer of data through the interfaces will be controlled at a protocol level 18, the protocols being established by the communications interface services 16 in accordance with known techniques. Again, the only requirement is that a protocol be utilized capable of transmitting data in the format required by the present invention. Since, as will be seen, this data is of a simple and limited nature, the nature of the data to be passed between conference participants will normally be determinative of the communications facilities required. If only simple messaging capabilities are required, the minimum requirement is the capability of passing simple message packets which may contain either data relating to conferencing control or actual message data. With the exception of the system conferencing services 14, all of the above requirements will be fulfilled by a station having an operating system and hardware compliant with the OSI (Open Systems Interface) standard, but the invention is not limited to use in conjunction therewith, and it is not necessary that all stations to be conferenced be compliant with any particular standard provided that they provide the minimum facilities discussed and can be programmed to implement the system conferencing services.

In a typical application, a utility program used to enable a station to participate in the conferencing system and to provide the conferencing services will establish a process or Client Application interacting with the application program interface (API) of the operating environment under which the program is run, and sets up a process (Network Manager) for managing a conference network and establishes inter-process communications (IPC) with the Network Manager in a manner appropriate to the operating environment, for example shared memory or queues.

The Network Manager in turn creates one or more protocol dependent threads (PDT) to handle the creation, maintenance and termination of a physical link to another station. Each PDT can handle only one such link, and thus there are as many PDTs as are necessary to handle the number of physical links established by the station: typically each PDT will handle a different communications protocol which the station is programmed to provide. The Network Manager also handles the routing of network messages and handles requests received from the client application through the API.

Further details of the program are provided after the following description of the nature of the system conferencing services, in the light of which the program is largely self-explanatory.

The nature of the system conferencing services will become more apparent from the following discussion of the establishment and operation of an exemplary conference involving multiple stations each provided with hardware and an operating system providing the minimum facilities described above and physical interfaces as exemplified.

It is assumed that work stations A, B, C, D, E & F are provided with suitable hardware and basic operating capabilities, and are programmed with a program product in the form of a communications application providing operating system extensions implementing the conferencing services 16. Various phases of the conferencing operation will now be discussed.

## ADDITION OF NODES TO NETWORK

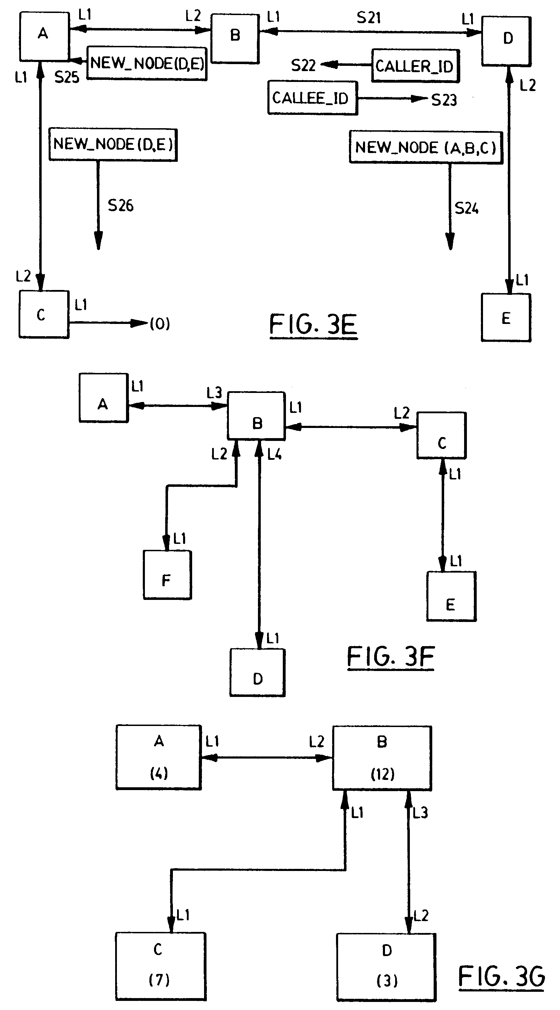

It is initially assumed that three machines, A, B and C, are running the communications application and support the protocols shown in Figure 3A. In Figure 3A (and subsequent Figures), the designation (T) represents the capability of a machine (station or nodes) to establish a communications link via a Token Ring (trademark) network to which a machine is connected, utilizing an appropriate protocol, the designation (E) represents the capability of a station to establish a communications link via an Ethernet (trademark) network to which a machine is connected, utilizing an appropriate protocol, the designation (A) represents the ability to establish an asynchronous communications link, using an appropriate protocol, typically via a modem and the public switched telephone network, and (O) represents the ability to establish some other form of communications link utilizing a protocol appropriate to the nature of the link. Each of the protocols utilized must be capable of providing guaranteed, ordered and error free delivery of messages on a point-to-point basis. The designations L1, L2 (and L3 where applicable) identify independent physical links of the above classes which can be managed by each station.

When the machines start up, all the links L1, L2 are put in a state waiting for any protocol-level connection requests from other machines. At this stage there are no networks established yet.

Suppose machine A wants to connect to machine B. Machine A knows that it can connect to machine B through the Token Ring protocol. Thus it issues a protocol-level connection request on L1, changing the state of L1 as a side effect.

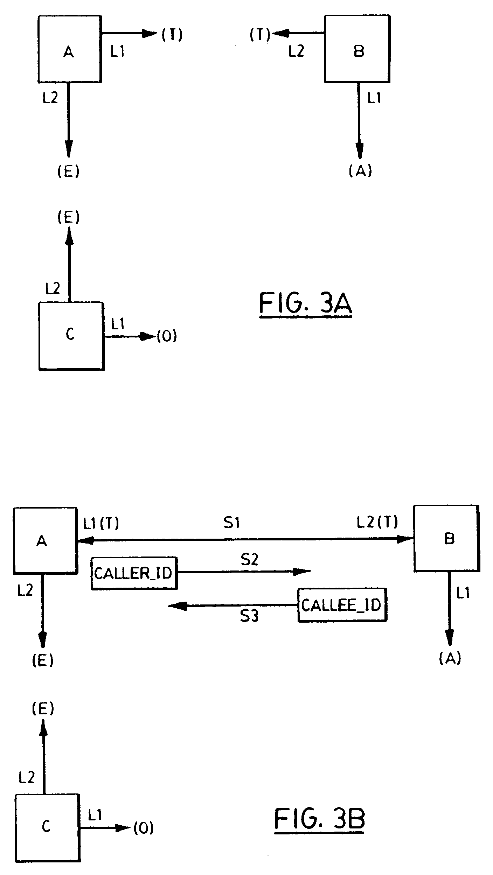

Assume machine B accepts the connection request. Then machine A and B now establish a protocol-level point to point connection S1 (See Figure 3B).

Both machines will go through a handshake sequence. The first step of the handshake sequence is for the machine A initiating the connection request to send a special message S2 (CALLER IDENTIFICATION) to the station B at the other end of the point to point connection (Figure 3B).

In the CALLER IDENTIFICATION message, A inserts some of its own hardware details, which may include some user information useful to a user of machine B to determine whether to set up a user-level connection.

4

When B receives the CALLER IDENTIFICATION message, and processes it, it sends back a CALLEE IDENTIFICATION message S3 and inserts similar information. This is the second and the last step of the handshake. The above procedure and the resulting network are shown in Figure 3B.

Now A knows that, through line L1, it is directly connected to B. B knows that through its L2 link, it is directly connected to A. A and B can send messages to each other through this point to point physical link. The contents of the routing table in machines A and B are as follows:

TABLE 1

| Machine A: | L1 → B(d) |
|---|---|
| Machine B: | L2 → A(d) |
| where (d) means directly connected. | |

C now wants to join the meeting held by A and B. C knows that it can reach A through the Ethernet protocol. Thus it issues a protocol-level connection request on L2.

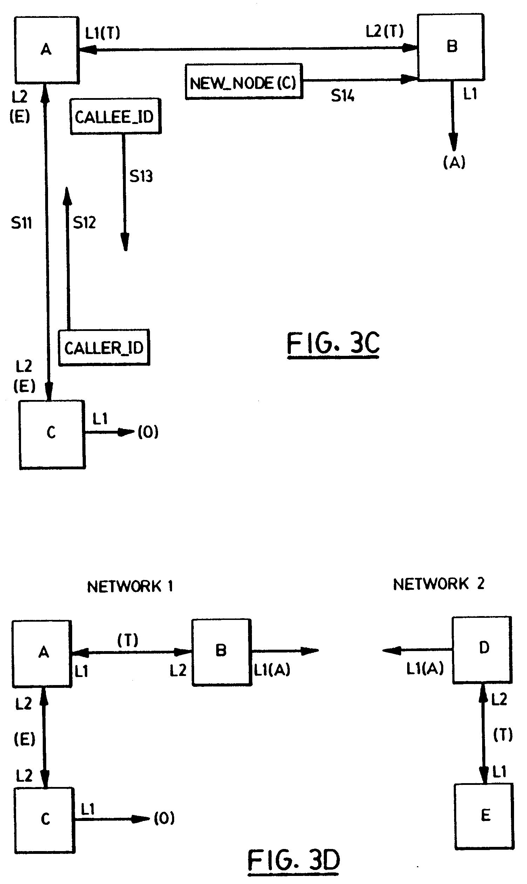

Assume machine A accepts the connection request. Then machine A and C set up a protocol-level point to point connection S11 (Figure 3C). Both machines will go through the handshake sequence. C sends the CALLER IDENTIFICATION message S12 to A. When A receives the CALLER IDENTIFICATION message, and has processed it, it sends back the CALLEE IDENTIFICATION message S13. This time, A puts its own information as well as machine B's information inside the message S12.

When C receives the CALLEE IDENTIFICATION message back, it knows that A is connected to B through another link in A. Thus C knows of B's existence in the network. C will update the routing table, noting that through its link L2, A is directly connected and B is indirectly connected via A. Thus C and B are "logically connected".

After processing the CALLER IDENTIFICATION message from C, A has to inform all other network nodes to which A was connected about the addition of C. A does this by broadcasting a NEW NODE(C) message to the nodes (in this case only B). A sends out the message S14 to B through its link L1.

When B receives the NEW NODE(C) message from A through its link L2, B knows that another node has joined the network, which is C. Since the message comes from A, B knows that C and B are logically connected through A. B thus adds C into the routing table. As the message NEW NODE(C) comes from line L2, B puts C into its L2 entry.

This completes the addition of node C into the network. The routing tables of all 3 machines are updated and the contents are as follows:

TABLE 2

| Machine A: | L1 → B(d) |
|---|---|
| | L2 → C(d) |
| Machine B: | L2 → A(d), C |
| Machine C: | L2 → A(d), B |
| where (d) means directly connected. | |

The above procedures and the resulting network are illustrated in Figure 3C.

Assume now that another network exists between two machines, D and E. The routing table entries for the 5 machines residing in two distinct networks are as follows:

## TABLE 3

Network 1:

| | | |
|---|---|---|
| Machine A: | L1 → B(d) |
| | L2 → C(d) |
| Machine B: | L2 → A(d), C |
| Machine C: | L2 → A(d), B |

Network 1:

| | | |
|---|---|---|
| Machine D: | L2 → E(d) |
| Machine D: | L1 → D(d) |

where (d) means directly connected.

The network topology is as shown in Figure 3D. D and E want to join the meeting held by A, B and C. D knows that it can reach B through the Async protocol. D issues a protocol-level connection request on L1.

Assuming that machine B accepts the connection request then machine B and D set up a protocol-level point to point connection S21 (see Figure 3E). Both machines will go through the similar handshake sequence. D sends the CALLER IDENTIFICATION message S22 to B. Inside the CALLER IDENTIFICATION message, D not only puts in its own information but also the information of all nodes inside the network to which D belongs (in this case node E).

When B receives the CALLER IDENTIFICATION message, and has processed it, it sends back the CALLEE IDENTIFICATION message. This time, B puts its own information as well as information concerning all nodes inside the network to which B belongs (in this case machines A and C) inside the message S23.

When D receives the CALLEE IDENTIFICATION message back, it knows that Machines A and C are connected to B through another link in B. Thus D knows of A and C's existence in the network. D will update the routing table, noting that through its link L2, B is directly connected and A and C are indirectly connected via B. Thus D is "logically connected" to A and C. After processing the CALLEE IDENTIFICATION message from B, D has to inform all of its previously connected network nodes about the addition of A, B and C. D does this by broadcasting a NEW NODE (A, B, C) message to all nodes to which D was connected prior to establishing the connection with B (in this case E). D sends out the message S24 to E through its link L2.

When E receives the NEW NODE (A, B, C) message from D through its link L1, E knows that some nodes have joined the network, which are A, B and C. Since the message comes from D, E knows that it is logically connected to A, B and C through D. E thus adds A, B and C into its routing table. As the message NEW NODE (A, B, C) arrives from link L1, E puts A, B and C into L1.

After processing the CALLER IDENTIFICATION message from D, B has to inform all other connected network nodes about the addition of D and E. B does this by broadcasting a NEW NODE(D,E) message to all nodes to which B was connected prior to establishing the connection with D (in this case nodes A and C). B looks at the routing table, and finds out that both A and C can be reached via line L2. Thus B sends out the message S25 to A and C through its link L2.

When A receives the NEW NODE (D,E) message from B through its link L1, A knows that other nodes have joined the network, which are D and E. Since the message comes from B, A knows that it is logically connected to D and E through B. A thus adds D and E into its routing table. As the message NEW NODE(D,E) comes from link L1, A puts D, and E into the table entry for L1. After processing the message, A realizes that the message S26 has to be sent to C as well. Thus A looks up the routing table, finding out that message can be sent to C via link L2. A resends the message NEW NODE(D,E) to C through its link L2.

When C receives the NEW NODE(D,E) message from A through its link L2, C knows that other nodes have joined the network, which are D and E. Since the message comes from A, C knows that it is logically connected to D and E through A. C thus adds D and E into the routing table. As the message NEW NODE(D,E) comes from link L2, C puts D, and E into the table entry for L2.

This completes the merging of the two networks. The routing tables of all 5 machines are updated and the contents are as follows:

6

TABLE 4

| Machine A: | L1 → B(d), D, E<br>L2 → C(d) |
|---|---|
| Machine B: | L1 → D(d), E<br>L2 → A(d), C |
| Machine C: | L2 → A(d), B, D, E |
| Machine D: | L1 → B(d), A, C<br>L2 → E(d) |
| Machine E: | L1 → D(d), B, A, C |
| where (d) means directly connected. ||

The above procedures and the resulting network are illustrated in Figure 3E.

DELETION OF NODES FROM NETWORK

The following exemplifies how individual nodes on the dynamic network can disconnect from a network, assuming a network topology as shown in Figure 3F before anyone disconnects from the network. The connection table contents for nodes A to F are as follows:

TABLE 5

| A: | L1 → B(d), C, D, E, F |
|---|---|
| B: | L1 → C(d), E<br>L2 → F(d)<br>L3 → A(d)<br>L4 → D(d) |
| C: | L1 → E(d)<br>L2 → B(d), A, D, F |
| D:<br>E:<br>F: | L1 → B(d), A, C, E, F<br>L1 → C(d), A, B, D, F<br>L1 → B(d). A, C, D, E |

The sequence of events, supposing that node C wants to disconnect itself from the network, is as follows. C broadcasts a LEAVE NETWORK message to all nodes inside the network. This is different from broadcasting the message to all known users on the network; the difference will be explained later.

Every node inside the network will process the message, and update its routing table. After updates, the routing tables becomes as follows:

TABLE 6

| A: | L1 → B(d), D, E, F |
|---|---|
| B: | L1 → NULL(d), E<br>L2 → F(d)<br>L3 → A(d)<br>L4 → D(d) |
| C: | L1 → E(d)<br>L2 → B(d), A, D, F |
| D:<br>E:<br>F: | L1 → B(d), A, E, F<br>L1 → NULL(d), A, B, D, F<br>L1 → B(d), A, D, E |

All the nodes inside the network remove C from their routing table. For physical links involving C as the directly connected node, a NULL is put in the table to show that only logically connected nodes are active via the physical link. The routing table entries for node C are not cleared. This is because, even though node C does not generate any more outgoing messages, its role as a gateway still continues and thus the routing information still needs to be retained. It is important to note that once a machine (say, C) issues the LEAVE NETWORK message, that machine should not receive any more incoming calls from any external nodes. This is because C, after issuing the LEAVE NETWORK message, is no longer recognized by any other nodes (A, B, D, E, F) on the network, no matter whether C is still physically attached to the network or not.

Now suppose that another machine E wishes to leave the network. E broadcasts a LEAVE NETWORK message to all nodes inside the network. Every node inside the network will process the message, and update the routing table. Node C also processes this message even though on E's machine node C no longer exists. C is able to process the message even though the message is not addressed to C is because C acts as a gateway within the network, and can intercept any message passing through. After updates, the routing table becomes the following:

TABLE 7

| A: | L1 → B(d), D, F |
|---|---|
| B: | L1 → NULL(d)<br>L2 → F(d)<br>L3 → A(d)<br>L4 → D(d) |
| C: | L1 → NULL(d)<br>L2 → B(d), A, D, F |
| D:<br>E:<br>F: | L1 → B(d), A, F<br>L1 → NULL(d), A, B, D, F<br>L1 → B(d), A, D |

All the nodes inside the network remove E from the routing table. Now that for node C, L1 is no longer physically and logically connected to any other node, this node C issues a REQ TERM PHY LINK message to the other end of the link (which is node E), requesting the disconnection of the physical link.

Node E, after issuing the LEAVE NETWORK message, checks itself to see if it can physically disconnect from the network. It can only do so if its role of a gateway is terminated. The criteria that a machine is NOT a gateway is that it has only one ACTIVE physical link before issuing the LEAVE NETWORK message. Node E having determined that it is not acting as a gateway, enters a state that waits for a message REQ TERM PHY LINK from the other end of the link. When the message arrives, node E replies with a ACK TERM PHY LINK (AGREE) message, agreeing the termination of the physical link. Both ends of the link then terminate the physical link, and node E now physically disconnects itself from the network.

At the same time, node B detects that L1 is no longer physically and logically connected to any other node. It sends out the REQ TERM PHY LINK message to node C.

When the message reaches node C, C may be still processing the termination of link with E (L1 at C). Thus it may determine that its gateway function still continues (with E) and cannot terminate the physical link with B. In this case, Node C will respond with the message ACK TERM PHY LINK (DISAGREE), thus rejecting the termination of the link with B.

Node B, receiving the negative acknowledgment, will NOT kill the physical link, even though it could. B will then periodically send the REQ TERM PHY LINK message again. Node C should reply ACK TERM PHY LINK (AGREE) immediately its role as a gateway has ceased.

During the time that C has not been physically disconnected, any machine joining the network from node A, B, D and F will cause a NEW NODE message to be broadcast. Node C will NOT be sent such a message from B, because B knows that on L1, nobody is on the network any more (even though C has not been physically disconnected because it is still processing the disconnection with E).

Optionally, after several trials, B can determine that the gateway on the other end (C) has failed to respond, and terminate the physical link unconditionally. B can do so because it knows that the machines on the other end of the link (C and E) have already left the network.

After B and C have completed the disconnection of the physical links, the contents of the connection tables on all the machines are as follows:

TABLE 8

| A: | L1 → B(d), D, F |
|---|---|
| B: | L2 → F(d) |
| | L3 → A(d) |
| | L4 → D(d) |
| C: | L2 → NULL(d), A, D, F |
| D: | L1 → B(d), A, F |
| E: | L1 → NULL(d), A, B, D, F |
| F: | L1 → B(d), A, D |

Even though on machine E, B still appears on the table entry, this does not matter since the user of machine E has decided to leave the network. The application can send a command to the communications support to clean up all table entries once the disconnection is completed. A similar procedure is carried out in respect of C.

Unexpected network link failure may be handled similarly to voluntary withdrawal as described above. An example of the procedure is as follows, assuming the same network topology as shown in Figure 3F, and connection table contents as shown in Table 5. If the link between B and C drops unexpectedly, both B and C detect the unexpected drop, and find that the link cannot be recovered.

The original network is now effectively split into two smaller and independent networks: the network formed by machines A, B, D and F, and the network formed by machines C and E. Since machines B and C detected the drop, they are responsible for informing other nodes in their networks about the lost link.

For machine B, its link L1 is dropped. By examining the routing table B knows that C and E are on link L1. Thus B sends out 2 LEAVE NETWORK messages: LEAVE NETWORK(C) and LEAVE NETWORK(E). B broadcasts the messages to all other nodes in its network (i.e. to nodes A, D and F). B then removes C and E from its routing table entries. Machines A, D and F, cannot tell whether the LEAVE NETWORK messages originate from B or from C and E. They just follow regular processing procedures, removing the nodes from their routing table entries.

For machine C, its link L2 is dropped. By examining the routing table C knows that A, B, D and F are on link L2. Thus C sends our 4 LEAVE NETWORK messages: LEAVE NETWORK(A), LEAVE NETWORK-(B), LEAVE NETWORK(D) and LEAVE NETWORK(F). C broadcasts the messages to all other nodes in its network (i.e. to node E). C then removes A, B, D and F from its routing table entries. Machine E cannot tell whether the LEAVE NETWORK messages originate from C or from A, B, C and F. It just follows regular processing procedures, removing the nodes from its routing table entries.

This completes the handling of an unexpected network link failure. After the messages have been processed by every machine on the network, the contents of the routing tables for each machine are as follows:

TABLE 9

| A: | L1 → B(d), D, F |
|---|---|
| B: | L2 → F(d)<br>L3 → A(d)<br>L4 → D(d) |
| C:<br>D:<br>E:<br>F: | L1 → E(d)<br>L1 → B(d), A, F<br>L1 → C(d)<br>L1 → B(d), A, D |

MECHANISM OF MESSAGE SENDING

Once a network is created, application messages can be sent between any nodes within the network. The recipient can be one single node, or a group of nodes on the network.

The nodes on the network are identified by a Network ID. In this exemplary embodiment it is a 16-bit value generated on a run time basis (e.g. when machine is powered up, the communication application is started up, and so on).

During the handshake operation when a node joins the network, the Network ID of the newly joined node is broadcast, along with a nickname in the form of an ASCII string, to all existing nodes on the network, within the NEW NODE message. All the nodes on the network now know the mapping between the nickname and the network ID.

All application messages are sent following the following procedure: if the message is too big, it is broken up into a number of fixed size packets; else the message is wrapped in one single packet. A communication attributes header is appended in the front of each packet. The header contains the list of Network IDs to which the message is to be sent.

A routine in the communications support program providing the conferencing services looks at the list of Network IDs, and ascertains what physical links are involved to send the packet to the recipient. Assuming a network configuration as shown in Figure 3F, in which the figures shown within brackets at each node represent the Network ID of that node, the routing tables for each machine are as shown below:

TABLE 10

| Machine A: | L1: | B(d, 12),<br>C(i, 7),<br>D(i, 3) |
|---|---|---|
| Machine B: | L1:<br>L2:<br>L3: | C(d, 7),<br>A(d, 4),<br>D(d, 3) |
| Machine C: | L1: | B(d, 12),<br>A(i, 4),<br>D(i, 3) |
| Machine D: | L2: | B(d, 12),<br>C(i, 7),<br>A(i, 4) |

Where X indicates direct (d) or logical (i) connections, and Y indicates the network ID of the connected node.

If C wants to send a message to B and D, it checks its routing table, and sees that both B and D can be reached via physical link L1. Thus C formats the packet and sends the packet out ONCE on link L1.

When B receives the packet from C, on L1, it knows that this message is sent to both B and D. Thus B processes the incoming packet, extracting the message wrapped inside. Since the packet is to be sent to D as well, B resends the packet to D. It looks up the routing table and see that D can be reached by link L3, and thus B sends the packet (using an exact copy of the packet received from C) to D along link L3. When D receives the packet from B, it will process it. There exists a mechanism (discussed below) that avoids D sending the packet back to B.

Two criteria exist to determine the physical links involved in sending a packet. They are as follows:

a) If the packet to be sent out is NOT originated from the local machine (i.e. the packet is a received one, requiring resending), the packet is NOT sent to the physical link the packet was received on.

Using the above example, when D receives the packet from B on link L2, it processes it and finds out the recipient list includes B. Thus, D looks at the routing table and find out that B can be reached on link L2. Therefore the packet is supposed to be sent out via link L2. But D received the packet on link L2, so the packet is not resent.

b) To provide another level of robustness, a packet is never resent when the packet received has the same originator network ID as that of the receiving machine. This avoids any unexpected network error from having the result that the packet originator receives the transmitted packet.

MACHINE ID COLLISION RESOLVING MECHANISM

When the system is used in a personal conferencing environment, and since in any practical situation only a few people will be in a conference, there will be very little chance that two or more machines will generate the same run-time network ID (which has 65536 possible values if a sixteen bit code is used).

When a new node tries to join a network, with a run-time network ID identical to that of any one of the nodes already in the network, a network ID collision occurs. Since all application messages use the 16-bit network ID to identify the source and the destinations, all network nodes must have unique network IDs.

If the nicknames are combined with the network IDs, it is virtually impossible to have collision on the combination, but this increases transmission overhead considerably, and does not theoretically eliminate the possibility of collision.

The following mechanism can be used to correct the network collision problem. Assume for example that machine A issues a protocol-level connection request to machine B, and B accepts the request, establishing a protocol-level link. Also assume that machines A and B already have set up networks with some other machines. During the handshake, A sends the CALLER IDENTIFICATION message to B. Inside the message A includes its own network ID and the network IDs of all the machines connected to A prior to this connection.

The mechanism requires the called machine (B) to be responsible for resolving any network ID collision problem. B processes the CALLER IDENTIFICATION message. It checks to see of ANY of the network IDs A has sent in the CALLER IDENTIFICATION message collides with any of the network IDs inside B's network. B has to check all network IDs sent by A in the message, since the network A is in and the network B is in are merged together when A and B are connected. Thus B has to make sure the nodes on the new (merged) network have no network ID collisions. If there is no network ID collision, the two networks can be merged and the handshake procedure continues.

If there is a network ID collision, B is responsible for resolving the collision. B generates a new network ID that does not collide with any of the network IDs on the merged network. Instead of sending the CALLEE IDENTIFICATION message, B sends out an UPDATE NETWORKID message. Inside the message is the nickname, and the old and the new network ID of the node involved in the collision. It is the node in the network requesting the connection that is updated. Thus in this example, the node in network A which is involved in the collision is updated. B then proceeds with the handshake to complete the merging of the two networks, and B updates its routing table using the new network ID for the colliding node. Optionally B can wait for an acknowledgement from the node involved.

A program used to set-up, control and implement the procedures generating the various messages discussed above and responses thereto is exemplified below in pseudocode, using syntax similar to that of the C language. It will be appreciated that details of the code will be dependent upon the operating and hardware environments within which the program is to be implemented, and will be readily apparent to those skilled in the art of programming in those environments. The pseudocode is written so as to be self-explanatory taken in conjunction with the description set forth above. Whilst some details of coding will depend on the characteristics of the hardware platform on which the program is to be executed, a program written in a high level language should have a substantial degree of portability.

The pseudocode is presented in three main sections. In Appendix 1, pseudocode listings are provided of principal function calls or requests made by the Client Application to the API. In Appendix 2, a pseudocode listing is provided of essentials of the Client Application itself, including its handling of messages (shown in upper case) received from the API. Appendix 3 is a listing of the pseudocode setting up and operating the Network Manager and PDT(s). Messages exchanged between the Network Manager and the API, between the Network Manager and a PDT, and passed from the Client Application, are identified by the use of upper case characters. In the case of internal messages between the Network Manager and the PDT, message names are prefixed MSG PDT , whilst messages between the Network Manager and API are merely prefixed MSG.

APPENDIX 1

```
/******************************************************************/
/*      ComInit()                                               */
/******************************************************************/
ComInit()
{
        . Initialize local machine

        . Create IPC

        . Create the process that runs the Network Mgr/PDTs

        . Create a thread that waits on the IPC for any incoming
          messages/events

        . Create and format a message to initialize comm software.
          Then send the message to the newly created Network Mgr/PDT
          process to initialize the Network Mgr/PDT process.

        . return
}

**** The thread created the ComInit() call is as follows ****

/******************************************************************/
/*      ComWaitEventThread()                                    */
/******************************************************************/
ComWaitEventThread()
{
        while (not terminate)
        {
                . Wait for message from IPC. If there are no messages
                  in the IPC, blocks itself until a message comes in

                . Inform Client App. about the incoming message
        }

        . return
}

/******************************************************************/
/*      ComConnect()                                            */
/******************************************************************/
ComConnect()
{
        . Create and initialize a message for connect request

        . Send the connect request through IPC to Network Mgr/PDT
          process.

        . return
}

/******************************************************************/
/*      ComDisconnect()                                         */
/******************************************************************/
ComDisconnect()
{
        . Create and initialize a message for disconnect request
```

12

```
                   . Send the disconnect request through IPC to Network Mgr/PDT
                     process.

                   . return
    }


    /****************************************************************/
    /*        ComAcceptJoinNetReq()                               */
    /****************************************************************/
    ComAcceptJoinNetReq()
    {
                /* This call is made after a SOMEONE_REQUEST_TO_JOIN_NETWORK
                 * is sent from Network Mgr/PDT process to API, and Client App.
                 * is informed and decided to allow the join network request.
                 */

                . Create and initialize a message for accept join net request

                . Send the request through IPC to Network Mgr/PDT process.

                . return
    }


    /****************************************************************/
    /*        ComRejectJoinNetReq()                               */
    /****************************************************************/
    ComRejectJoinNetReq()
    {
                /* This call is made after a SOMEONE_REQUEST_TO_JOIN_NETWORK
                 * is sent from Network Mgr/PDT process to API, and Client App.
                 * is informed and decided NOT to allow the join network
                 * request.
                 */

                . Create and initialize a message for reject join net request

                . Send the request through IPC to Network Mgr/PDT process.

                . return
    }


    /****************************************************************/
    /*        ComSend()                                           */
    /****************************************************************/
    ComSend()
    {
                . Create and initialize a message for send data request

                . Send the request and the data through IPC to Network Mgr/PDT
                  process.

                . return
    }


    /****************************************************************/
    /*        ComTerminate()                                      */
    /****************************************************************/
    ComTerminate()
    {
```

```
/* This call is made when the Client App. terminates */

. Create and initialize a message for terminate request

. Send the request through IPC to Network Mgr/PDI process.

. destory the receive event thread

. close the IPC

. return
}
```

```
/* Create the Comm */
ComInit();

/* Waits for the result: wait for message INIT_RESULT */

/* Connect to a person */
ComConnect();

/* Waits for the result: wait for message CONNECT_RESULT */

/* Send data */
ComSend();

/* wait for event: process event depending on the message
 *                 type.
 */
Wait4Event( &event );
switch(event.eventtype)
{
        case SOMEONE_JOINED_NETWORK:
                /* Display a dialog to user, someone joined
                 * the network
                 */
                break;
        case SOMEONE_LEFT_NETWORK:
                /* Display a dialog to user, someone left
                 * the network
                 */
                break;
        case INCOMING_DATA:
                /* Process incoming data */
                break;
        case SOMEONE_REQUEST_TO_JOIN_NETWORK:
                /* Display a dialog to user, informing him
                 * that someone wants to join the network.
                 */
                if (bAllowToJoinNet)
                {
                        ComAcceptJoinNetReq();
                }
                else
                {
                        ComRejectJoinNetReq();
                }
                break;
        default:
                break;
        }



             .
             .
             .


/* Client App. terminates. First disconnect from network */
ComDisconnect();

/* Wait for disconnect result */

/* Terminates */
ComTerminate();
```

15

```
/* main() function here is the first function called when Network Mgr
 * PDI process is created.
 */
main()
{
        . connects to the IPC created by API

        . wait for message MSG_INIT_COMM_SOFTWARE from API

        . initialize various components

        . creates the PDIs that are specified by the client app.
          (i.e. call the appropriate PDIcreate() routines)

        . send the message MSG_INIT_COMM_RESULT to API through IPC.

        . call NetworkMgr()

        . return
}


NetworkMgr()
{
        /* This function loops until the terminate message from API
         * is received.
         */

        while (1)
        {
                . wait for messages on IPC from API. If there are no
                  messages on IPC, blocks itself until a message comes
                  in.

                switch (message type)
                {
                        case MSG_CONNECT:
                                . check what protocol and hardware
                                  adapter should be used to connect
                                  to the user.

                                . format the MSG_PDI_CONNECT and send
                                  to the appropriate PDI for processing

                                break;
                        case MSG_DISCONNECT:
                                . format the MSG_PDI_DISCONNECT and
                                  send it to all active PDIs (since
                                  this message means disconnecting
                                  the client app. from the network,
                                  which implies disconnecting all
                                  physical connections.

                                break;
                        case MSG_ACCEPT_CONNECT_REQ:
                                . perform network ID collision check
                                  (pseudocode omitted here)

                                . format an across-network message
                                  CALLEE_IDENTIFICATION with the
                                  .
```

```
                    bAcceptCall flag set to TRUE.

                  . format the internal message
                    MSG_PDT_SEND_DATA and specify
                    the CALLEE_IDENTIFICATION message
                    as the data to go out.

                  . send the message MSG_PDT_SEND_DATA
                    to the appropriate PDT

                  /* Now caller and anyone with the
                   * caller before the connection is
                   * established join the network. Has
                   * to let the local client app and
                   * other stations on the network to
                   * know about this
                   */

                  . format the across-network message
                    NEW_NODE with the
                    caller's name and network ID.

                  . send the across-network message
                    to all active PDTs, except the
                    just-connected one, via the
                    MSG_PDT_SEND_DATA request.

                  /* Add the caller's name and network
                   * ID, provided in the
                   * CALLER_IDENTIFICATION message,
                   * into the routing table
                   */

                  . if (caller has connected to someone
                        prior to making this connection)
                    {
                         . call SomeNewUsersToo()
                    }

                  /* If the hardware can support
                   * multiple connections simultaneously
                   * then create a new PDT of the same
                   * protocol
                   */
                  if (hardware on which connection is
                      established supports multiple
                      connection)
                  {
                         . create a new PDT
                           (i.e. calls the appropriate
                               PDTcreate() routine)
                  }

                  break;
          case MSG_REJECT_CONNECT_REQ:
                  . format an across-network message
                    CALLEE_IDENTIFICATION with the
                    bAcceptCall flag set to FALSE.
```

```
                    . format the internal message
                      MSG_PDT_SEND_DATA and specify
                      the CALLEE_IDENTIFICATION message
                      as the data to go out.

                    . send the message MSG_PDT_SEND_DATA
                      to the appropriate PDT

                    /* Since the user has refused the
                     * connection, the physical connection
                     * is useless. Kill the connection
                     * established
                     */
                    . send the message MSG_PDT_DISCONNECT
                      to the appropriate PDT

                    . send the message MSG_PDT_TERMINATE
                      to the appropriate PDT to terminate
                      it.

                    . create a new PDT of the same protocol
                      to wait for the connect request from
                      someone (i.e. calls the PDTcreate()
                      function).

                break;
        case MSG_SEND_DATA:
                    . format the internal message
                      MSG_PDT_SEND_DATA and specify
                      the data referred to in MSG_SEND_DATA
                      as the data to go out.

                    . look up in the routing table. Find
                      the PDTs the data reccipients are
                      connected to.

                    . send the message MSG_PDT_SEND_DATA
                      to the appropriate PDTs

                break;
        case MSG_TERMINATE:
                    . terminate all active PDTs

                    . return to main()
        case MSG_PDT_PHY_CONNECT_SUCCESSFUL:
                    . format a message
                      MSG_CONNECT_RESULT with return code
                      OK

                    . send the message to API through
                      IPC

                    . check the CALLEE_IDENTIFICATION
                      message received. If there are
                      any other users already connected
                      to the callee, call SomeNewUsersToo()

                    . Create a new PDT of the same protocol
                      to wait for connect requests from
```

```
                                        someone (i.e. calls PDIcreate()
                                        routine).
                                    break;
                        case MSG_PDI_PHY_CONNECT_FAILED:
                                    . format a message
                                      MSG_CONNECT RESULT with return code
                                      FAILED

                                    . send the message to API through
                                      IPC

                                    break;
                        case MSG_PDI_DISCONNECT_SUCCESSFUL:
                                    . format a message
                                      MSG_DISCONNECT_RESULT with return
                                      code OK

                                    . send the message to API through
                                      IPC

                                    break;
                        case MSG_PDI_DISCONNECT_FAILED:
                                    . format a message
                                      MSG_DISCONNECT_RESULT with return
                                      code FAILED

                                    . send the message to API through
                                      IPC

                                    break;
                        case MSG_PDI_RECEIVED_DATA:
                                    . call ProcessInData()

                                    break;
                        case MSG_PDI_CONNECTION_FAILED_UNEXPECTEDLY:
                                    . for the PDI that the connection
                                      failed:
                                      {
                                            . find out all users connected
                                              via the failed PDI

                                            . for every user, format a
                                              MSG_SOMEONE_LEFT_NETWORK
                                              and send to API.

                                              Also format an across-network
                                              message LEAVE_NETWORK with
                                              the user's name and network
                                              ID. Broadcast the
                                              LEAVE_NETWORK message to all
                                              remaining active PDIs
                                      }

                                    break;
                        default:
                                    break;
                        }
            } /* end while(1) */
```

19

```
        return;
}

**** The code that processes incoming data are as follows ****
ProcessInData()
{
        switch (incoming data type)
        {
                case CLIENT_APP_DATA:
                        . format a message MSG_INCOMING_DATA
                          with the incoming data

                        . send the message to API through
                          IPC

                        . if (message is to be forwarded to other
                              stations as well)
                        {
                                . look at the receipients list.
                                  Find out the PDTs involved to
                                  send to all those receipients

                                . except the PDT that the data
                                  is received from, format the
                                  message MSG_PDT_SEND_DATA
                                  with the client data received
                                  as the data to be sent out, and
                                  send the MSG_PDT_SEND_DATA to
                                  those PDTs involved.
                        }

                        . return
                case CALLER_IDENTIFICATION:
                        . extract the user's name and information from
                          the message

                        . format a message
                          MSG_SOMEONE_REQUESTED_JOIN_NETWORK with the
                          caller's name and information, as well as
                          the PDT on which the CALLER_IDENTIFICATION
                          message is received.

                        . send message to API through IPC

                        . return
                case NEW_NODE:
                        . add the user's name and network ID onto the
                          Network Mgr's routing table, and record which
                          PDT the NEW_NODE message is
                          received from.

                        . format a message MSG_SOMONE_JOINED_NETWORK
                          with the user's name in the message.

                        . send the MSG_SOMEONE_JOINED_NETWORK message
                          to API through IPC

                        . check in the routing table any other PDTs
                          that are active. If so, re-broadcast the
```

20

```
                        NEW_NODE message to those PDIs
                        via a MSG_PDT_SEND_DATA request.

                    . return
            case LEAVE_NETWORK:
                . remove the user's name and network ID in the
                  Network Mgr's routing table.

                . format a message
                  MSG_SOMONE_LEFT_NETWORK
                  with the user's name in the message.

                . send the MSG_SOMEONE_LEFT_NETWORK message
                  to API through IPC

                . check in the routing table any other PDIs
                  that are active. If so, re-broadcast the
                  LEAVE_NETWORK message to those PDIs
                  via a MSG_PDT_SEND_DATA request.

                . return
            case REQ_TERM_PHY_LINK:
                . depending on network topology:

                  if (OK to terminate link)
                  {
                        . send an across-network
                          ACK_TERM_PHY_LINK message via
                          MSG_PDT_SEND_DATA request on
                          the appropriate PDT

                        . send message MSG_PDT_TERMINATE
                          to the disconnected PDI
                  }
                  else
                  {
                        . discard the message
                  }

                break;
            default:
                break;
        }

    return;
}


**** The routine SomeNewUsersToo() is as follows ****
SomeNewUsersToo()
{
        /* When the caller's connection request is accepted,
         * the caller is allowed to join the network. If
         * the caller is already connected to some other
         * users, they automatically are allowed to join
         * the network too.
         *
         * The same applied to the caller's side. When callee
         * accepted caller's request, the caller also let
         * all the users already connected to caller to let
```

21

```
         * them know about callee and users connected to
         * calle.
         *
         * This routine process those new users.
         */

         . add all the users already connected to the caller
           to the routing table. These users' names and
           network IDs are provided in the CALLER_IDENTIFICATION
           (or CALLEE_IDENTIFICATION) message sent by caller

         . for each user specified in the CALLER_IDENTIFICATION
           (or CALLEE_IDENTIFICATION)
           message (except caller itself)
           {
                . format a MSG_SOMEONE_JOINED_NETWORK message and send
                . it to API through IPC.

                . format the across-network message NEW_NODE with the
                  user's name and network ID.

                . send the across-network message to all active PDIs,
                  except the just-connected one, via the
                  MSG_PDT_SEND_DATA request.
           }

         . return
         }

**** The routine that creates PDI is as follows ****
PDTcreate()
  {
         /* This is a generalized routine. For different protocols
          * the input parameters and actual function names will be
          * different. This pseudocode is to demonstrate the
          * logic flow only.
          */

         . if (need to initialize hardware)
           {
                . initialize hardware
           }

         . connect to hardware, and acquire the needed resources
           from the hardware for a new connection

         . create a message queue to receive requests from Network
           Manager

         . creates a thread of execution, PDIthread()

         . return
         }

PDIthread()
  {
         /* This thread performs the essential function of the PDI */
         . for the newly acquired resources for a connection, send the
           command to the hardware to PREPARE for a connect request
```

from someone else.

```
. while (1)
 {
        /* poll the message queue, check for the connect
         * request (i.e. message MSG_PDT_CONNECT) from
         * Network Mgr. If there are none, proceed with
         * next instruction.
         * Else, process it and exits the loop.
         */
        . if (MSG_PDT_CONNECT message in message queue)
         {
                . cancel the wait-for-connect-request
                  command sent to the hardware

                . perform the connect request to the
                  destination machine

                . if (connect failed at the physical
                      level)
                 {
                        . send the message
                          MSG_PDT_PHY_CONNECT_FAILED to
                          Network manager
                 }
                 else
                 {
                        . send the CALLER_IDENTIFICATION
                          message to the destination

                        . wait for the CALLEE_IDENTIFICATION
                          message from the destination

                        . depending on the boolean flag
                          bAcceptCall in CALLEE_IDENTIFICATION
                          message, send the message
                          MSG_PDT_PHY_CONNECT_SUCCESSFUL or
                          MSG_PDT_PHY_CONNECT_FAILED to
                          Network Manager

                        . exit this loop
                 }
         }

        /* check the hardware to see if there are any
         * connect request
         */
        if (connect request comes in)
        {
                . accept connect request at the physical
                  link level

                . wait for CALLEE_IDENTIFICATION message
                  from the caller

                . send message MSG_PDT_RECEIVED_DATA to
                  Network Manager, with the incoming
                  message CALLEE_IDENTIFICATION as the
                  data to be processed
```

```
                              . exit loop
                          }
          . }

          /* Exit loop: 3 possibile scernarios.
           *
           * 1. Connect request accepted by destination machine.
           *    Connection established at the user level. Can
           *    exchange data
           *
           * 2. Caller from another machine issued connect request
           *    and got accepted. Can exchange data.
           *
           * 3. Caller from another machine issued connect request
           *    and rejected. Wait for Disconnect request from
           *    Network Manager.
           */

          . issue command to hardware to PREPARE to receive data

          . while (1)
            {
                  /* Check to see if there are any requests from
                   * network manager
                   */
                  . if (request in message queue)
                    {
                          . extract first message in queue

                          . switch (message type)
                            {
                                  case MSG_PDT_DISCONNECT:
                                          . send the across-network
                                            message REQ_TERM_PHY_LINK
                                            to the other end of the
                                            physical link

                                          . wait for the
                                            ACK_TERM_PHY_LINK message
                                            from the other end

                                          . send the disconnect link
                                            command to the hardware

                                          . break;
                                  case MSG_PDT_TERMINATE:
                                          . if the link is still active,
                                            send command to the hardware
                                            to disconnect the physical
                                            link

                                          . terminate the thread of
                                            execution

                                          . exit while loop
                                  case MSG_PDT_SEND_DATA:
                                          . send the data out
```

24

```
                                          . break;
                              default:
                                          . unknown message, discard
                          }
              }

          . if (data received by hardware)
          {
                      . receive the data from hardware

                      . send message MSG_PDT_RECEIVED_DATA to Network
                        manager, with the data received from hardware
                        as the data to be processed
          }

          . if (connection dropped unexpectedly)
          {
                      . send message
                        MSG_PDT_CONNECTION_FAILED_UNEXPECTEDLY
                        to Network Mgr
          }
      }

      . terminate thread of execution
  }
```

## Claims

1. A computer workstation capable of participating in a computer conferencing network, including:

   means for establishing and discontinuing at least one bidirectional physical messaging connection with another workstation according to a protocol permitting the establishment of such a connection responsive to a protocol level request, whereby such a connection serves to link the two workstations in a computer conferencing network;

   means for maintaining a network routing table for storing data listing the workstations in the network to which said workstation is directly physically connected, and workstations in the network to which said workstation is logically connected directly or indirectly through those workstations to which it is physically connected;

   means responsive to the establishment of a connection with another workstation to transmit data stored in said routing table to said another workstation, and to receive from said another workstation data stored in its routing table;

   means for transmitting to the other workstations within the network, through the other workstations to which the workstation is physically connected, data relating to changes in the logical status of said workstation within the network, and for receiving through the other workstations to which the station is physically connected data as to changes in the logical status of said other workstations within the network; and

   means for updating the routing table in accordance with data received from said other workstations within the network.

2. A workstation according to claim 1, wherein the means for establishing and discontinuing a bidirectional physical messaging connection is provided by a computer network into which the workstation is physically connected.

3. A workstation according to claim 1, wherein the means for establishing and discontinuing a bidirectional physical messaging connection is provided by an asynchronous interface to a switched telephone system.

4. A workstation according to any preceding claim, including at least two independent means for establishing and discontinuing a bidirectional physical messaging connection.

5. A workstation according to any preceding claim, wherein the workstation is allocated an network ID, and wherein the means for establishing and discontinuing a bidirectional physical messaging connection is configured to transmit data in packets labelled with the network IDs of other stations to which it is logically connected via that physical connection and which are intended to receive the data, and to receive data labelled with its own ID or with the ID of stations to which it is logically connected via another physical connection.

FIG. 1

FIG. 2

FIG. 3A

FIG. 3B

FIG. 3C

FIG. 3D

NETWORK 1

NETWORK 2

L1 — L2 — B — L1 — S21 — L1 — D

NEW_NODE(D,E)

L1 — S25

S22 ← CALLER_ID

CALLEE_ID → S23

NEW_NODE(D,E)

NEW_NODE (A,B,C)

L2

S26

S24

L2 — C — L1 → (0)

L1 — E

FIG. 3E

A — L1 — L3 — B — L1 — L2 — C

L2 — L4

L1

L1

F — L1

E

L1 — D

FIG. 3F

A (4) — L1 — L2 — B (12)

L1 — L3

L1 — L2

C (7) — D (3)

FIG. 3G